# EUROPEAN PATENT SPECIFICATION

(11) **EP 4 142 213 B1**
(45) Date of publication and mention of the grant of the patent: **07.01.2026**
(21) Application number: 21193879.0
(22) Date of filing: 30.08.2021
(51) Int. Cl.: H04L 9/40

(54) **METHOD AND SYSTEM OF EDGE-BASED AUTO CONTAINMENT**
VERFAHREN UND SYSTEM FÜR EDGE-BASIERTES AUTOMATISCHES CONTAINMENT
PROCÉDÉ ET SYSTÈME DE CONFINEMENT AUTOMATIQUE UTILISANT LES BORDS

(43) Date of publication of application: 01.03.2023
(73) Proprietor: Bull SAS, 78340 Les Clayes-sous-Bois (FR)
(72) Inventor: GUPTA, Sonali, 410206 Ulwe Navi Mumbai (IN); VASUDEVAN, Vinod, FAIRFAX, 22030 (US)
(74) Representative: IPAZ

(56) References cited:
- EP-A2- 1 255 395
- WO-A1-03/010922
- US-A1- 2003 204 756

## Description

### Background of the invention

The present invention concerns a method of edge-based auto containment. It relates to a method and a system for automatically sending containment instructions from a central containment component contained in a public cloud to an endpoint contained inside a company network where a malicious activity has been detected.

In general, when potentially malicious activity is detected in the server or any other device within a company network, there is a need to take immediate containment or remediation measures to prevent the malicious activity. This involves blocking traffic to or from such servers or devices. Such containment measures are generally achieved by isolating the malicious server or applying relevant rules on the device such as a firewall. Traditionally, such containment procedures are initiated by raising a manual request to the device administrator of the company to block or isolate the server or to set up rules in the firewall to block connections. Cutting off connections to the outside from the malicious server enables blocking of malicious activities originating from the server. Isolation will also stop the spread of the malware into other systems of the company network. This process of manually doing containment takes time, during which the malicious attack could do more damage. Hence urgency and speed of containment activities is very important.

Auto containment solutions typically run in the public cloud and do not run inside the company network. This is a cloud-based SaaS approach. The servers and devices on which the containment procedures need to be carried out reside inside a company's network infrastructure.

Due to this situation of the SaaS based auto containment module running in the cloud, there arises a need to send instructions from outside of the company network to the server or device running inside the company's network. Some common containment actions could involve isolating the server or adding blocking rules to the firewall. This will however mean that the company network will need to allow incoming connections from the internet to come into the company network. This opening up of the company network to incoming connections from the internet has its own risks. Disguised as genuine users, malicious actors could use such incoming traffic into the company network to inject malware or to carry out malicious activities. Hence the companies in general prefer not to give permission to incoming internet traffic. They do not want to open up their networks to the outside world and the risks associated with it.

The document EP1255395A2 discloses a scheme allowing communication between a network device on a protected network and an external network device outside the protected network using "reverse proxying". A proxy server receives incoming data on behalf of the protected network device, which data is retrieved by a proxy agent that periodically polls the proxy server to see if any data awaits retrieval.

The document US2003/204756A1 discloses an electrical power management architecture for managing an electrical power distribution system. The system comprises a firewall to facilitate communications between a secure network and an unsecure network of the system. First and second power management devices are used to manage solicited and unsolicited communications.

The document WO 03/010922A1 discloses a network security system deployed between an internet backbone and intranets that belong to subscribing organizations. The system includes a scanning system that scans incoming electronic mail for malicious code and an anti-virus server for downloading anti-virus code to clients on the intranets. A switch is provided for directing incoming electronic mail from the internet backbone to the scanning system so that the electronic mail can be scanned. In one embodiment, a decoy server is also provided for masquerading as a legitimate server and logging suspicious activity from communications received from the internet backbone.

An objective of the present invention is to quickly perform the containment activities through a specialized automated containment solution.

Another objective of the present invention is to design a SaaS based auto containment module running in the cloud and which is able to securely communicate with an endpoint running inside the company network.

### Disclosure of the invention

These and other objects of the present invention are substantially achieved by providing a method for automatically sending containment instructions from a central containment component contained in a public cloud to an endpoint contained inside a company network where a malicious activity has been detected; the method comprising the following steps:
- the central containment component elaborates and places a secured containment instruction inside a messaging queue of the central containment component,
- a component, called edge containment component, running inside the company network, periodically polls the messaging queue service by creating an outgoing connection from the company network to the central containment component in the public cloud,
- when the edge containment component detects the containment instruction, the edge containment component retrieves, decodes and sends the containment instruction to the endpoint inside the company network.

The present invention provides a solution for resolving the issue of companies unwilling to provide incoming connections into their network to carrying out automated containment activities from outside of the company network. The present invention thus enables remediation activities to be done without having to open up the company networks to incoming connections.

The method according to the invention uses a distributed framework of two components. One component called the Edge Containment Component (ECC), runs within the company network perimeter and processes as close to the auto containment destination as possible.

According to the invention, such destinations are endpoints which could be a server a device or a firewall.

The second component called the Central Containment Component (CCC), resides outside of the company network perimeter. It runs on the main platform, for example as a SaaS (Software as a Service) platform, and is located in a public cloud infrastructure.

In the present invention, the cloud based Central Containment Component does not make any incoming connections into the company network. Rather, the Edge Containment Component residing inside the company network makes outgoing connections from the company network to the Central Component. This way the need to provision incoming network connections into the company network is totally avoided.

The edge containment component regularly polls, through outgoing connections, for any requests for auto containment with the cloud based central containment component.

According to an embodiment of the invention, the secured containment instruction can consist in coding the instruction to be understood only by the edge containment component. The containment instruction is then a specialized auto containment command that the edge containment component is programmed to understand.

Advantageously, the step of retrieving the containment instruction by the edge containment component is realized as a part of the same outgoing connection created by the edge containment component from the company network to the central containment component in the public cloud.

In this manner, the edge containment component gets the instruction from the outside of the company network to the location where it is running within the company network through a specialized design of piggybacking on the outward connection it initiates. This is done without the need for an incoming connection into the company network.

In other words, piggybacking means that there is no separate channel for data retrieval, instead it uses the response to the outbound polling channel.

According to an embodiment of the invention, the endpoint can send an acknowledgement of success or failure to the edge containment component when the containment instruction is applied.

The edge containment component can send the acknowledgement to the central containment component by creating an outgoing connection and placing the acknowledgement in the messaging queue.

According to the invention, the central containment component can also periodically poll the messaging queue service to detect any acknowledgement.

In this way, there is no connection from the cloud to the company network.

By company network, it means a private network or a local area network in opposition to the public cloud corresponding to a wide area network which is extern to the company network.

According to an advantageously embodiment of the invention, the edge containment component uses an in-built API interface to execute the containment instruction on the endpoint.

The edge containment component can comprise several in-built APIs, each configured to communicate with a kind of endpoint. The APIs allows for communicating with at least endpoints intended to receive containment instruction, or preferably all endpoints of the company network.

The present invention uses a specialized messaging queue for the purpose of requesting containment actions to be performed by the edge containment component. The availability of this messaging component ensures that the central containment component does not need to wait for an acknowledgement from the edge containment component.

The messaging queue has its own service layer which the edge containment component can call to read / write the queue. So for the edge containment component, it is a web service to call both to read the request and write the response.

Advantageously, the central containment component can run asynchronously with respect to the edge containment component.

Through this specialized design, it is ensured that the central containment component is not bottlenecked and can work in an optimal manner.

According to another aspect of the invention, it is proposed a system for managing containment instruction, the system comprising:
- a central containment component contained in a public cloud configured to send a containment instruction to an endpoint contained inside a company network where a malicious activity has been detected; the central containment component being configured to elaborate and place a secured containment instruction inside a messaging queue of the central containment component,
- a component, called edge containment component, running inside the company network and configured to periodically poll the messaging queue service by creating an outgoing connection from the company network to the central containment component in the public cloud; when the edge containment component detects the containment instruction, the edge containment component is configured to retrieve, decode and send the containment instruction to the endpoint inside the company network.

### Brief Description of the Drawings

Further advantages and characteristics of the invention will become apparent on examining the detailed description of an embodiment, which is in no way limitative, and the attached drawings, in which:
Figure 1 is a general view of the system according to the invention,
Figure 2 is a user interaction diagram illustrating chronologically interactions between components according to the invention,
Figure 3 is a diagram illustrating successive steps of the method according to the invention.

### Detailed Description

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

Hereinafter, the present invention will be described in detail by explaining exemplary embodiments of the invention with reference to the attached drawings.

In accordance with the preferred embodiment, the method according to the invention relates to the following materials and processes:
Embodiments herein include computer-implemented methods, tangible non-transitory computer-readable mediums, and systems. The computer-implemented methods may be executed, for example, by a processor that receives instructions from a non-transitory computer-readable storage medium. Similarly, a system described herein may include at least one processor and memory, and the memory may be a non-transitory computer-readable storage medium. As used herein, a non-transitory computer-readable storage medium refers to any type of physical memory on which information or data readable by a processor may be stored. Examples include random access memory (RAM), read-only memory (ROM), volatile memory, nonvolatile memory, hard drives, CD ROMs, DVDs, flash drives, disks, and any other known physical storage medium. Singular terms, such as "memory" and "computer-readable storage medium," may additionally refer to multiple structures, such a plurality of memories and/or computer-readable storage mediums. As referred to herein, a "memory" may comprise any type of computer-readable storage medium unless otherwise specified. A computer-readable storage medium may store instructions for execution by a processor, including instructions for causing the processor to perform steps or stages consistent with an embodiment herein. Additionally, one or more computer-readable storage mediums may be utilized in implementing a computer-implemented method. The term "computer-readable storage medium" should be understood to include tangible items and exclude carrier waves and transient signals.

The present invention concerns a method for automatically sending containment instructions from a central containment component contained in a public cloud to an endpoint contained inside a company network where a malicious activity has been detected.

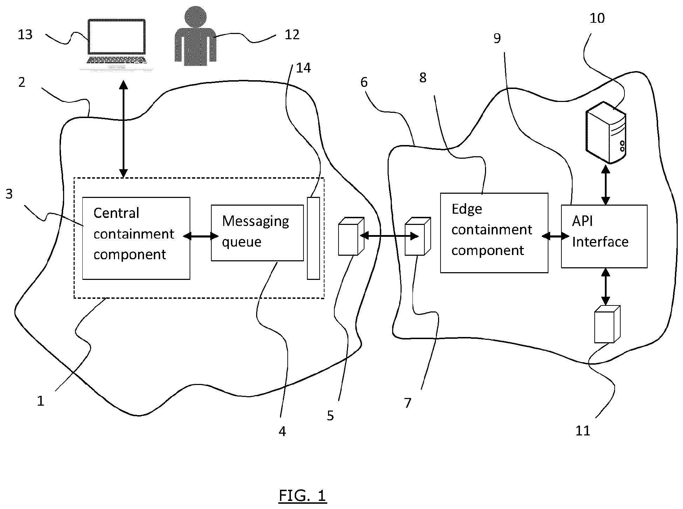

The diagram on figure 1 provides a pictorial overview of the present invention.

The system of the invention is a distributed system comprising a containment module 1 located in the public cloud 2 and an edge containment component 8 located in a company network 6.

The public cloud and the company network can communicate via the cloud firewall 5 and the company firewall 7.

The containment module comprises a central containment component 3 and a messaging queue 4. The central containment component 3 can be a software component integrating the messaging queue 4. The central containment component 3 is configured to send containment instructions or commands to the messaging queue, and to periodically poll the messaging queue for retrieving acknowledgements.

According to the invention, in case of malicious activity detection inside the company network, the central containment component 3 must not create an outgoing connection from the public cloud 2 to the company network 6.

Inside the company network, the edge containment component 8 can communicate with the endpoints which are on figure 1 the server 10 and the firewall 11. This is done by using API interface 9.

The method according to the invention can be carried out as follows.

A user 12 on figure 1 can request for containment actions when required through a screen 13 that is available in the containment module 1. These requests come first to the central containment component (CCC).

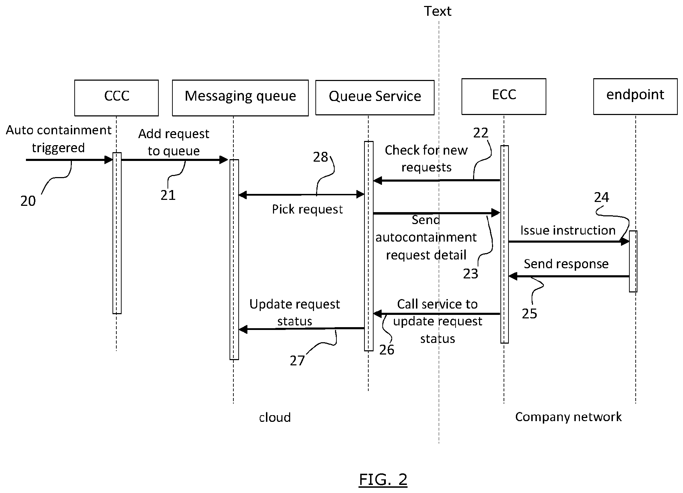

Figure 2 concerns a chronological processing logic.

When the user 12 requests for a specific containment action through the screen 13, an auto containment request is triggered at step 20. The central containment component places a specialized message containing a specialized command for that containment action into the messaging queue 4 at step 21. This specialized piece of information is thus coded to be understood only by the edge containment component 8. This is done to keep the security aspects.

The specific containment action that needs to be undertaken on the endpoint could be:
1. Blocking of an IP address in a firewall,
2. Killing of a suspicious process in the end point,
3. Deleting suspicious files at the end point,
4. Renaming a file at the end point,
5. Quarantining or isolating the endpoint.

The edge containment component 8 is configured to periodically poll the messaging queue service 14 for containment instructions it needs to execute. At step 22, the edge containment component polls the queue service (which in turn checks the queue content at step 28) and finds that there is a specialized command awaiting action in the messaging queue of the central containment component. Then, at step 23, the edge containment component 8 retrieves this containment instruction, as part of the same outgoing connection it makes for polling to the messaging queue service 14, in the form of a response. In this manner, the edge containment component 8 gets the containment instruction from the cloud 2, outside of the company network, to the location where it is running within the company network 6 through a design of piggybacking on the outward connection it initiates.

On getting the containment instruction to be executed, the edge containment component running inside the company network, issues at step 24 the instruction to the endpoint also running inside the company network. This is done through specialized APIs that the endpoint understands. The containment procedure is thus applied in an automated manner on the endpoint.

After the endpoint has applied the containment procedure on itself through the command sent by the edge containment component, the endpoint sends at step 25 the acknowledgement of success (or failure) to the edge containment component.

The edge containment component sends this acknowledgement in turn by making an outgoing connection back to the public cloud based central containment component at step 26. The acknowledgement is then sent to the messaging queue at step 27.

The cloud based central containment component periodically polls the messaging queue service for acknowledgements from the edge containment components. On receiving the acknowledgement of success or failure from the edge containment component, the central containment component informs the user who initiated the auto containment procedure accordingly through the screen interface. This completes the end to end cycle of initiation of auto containment and getting back the acknowledgement or status from the endpoint.

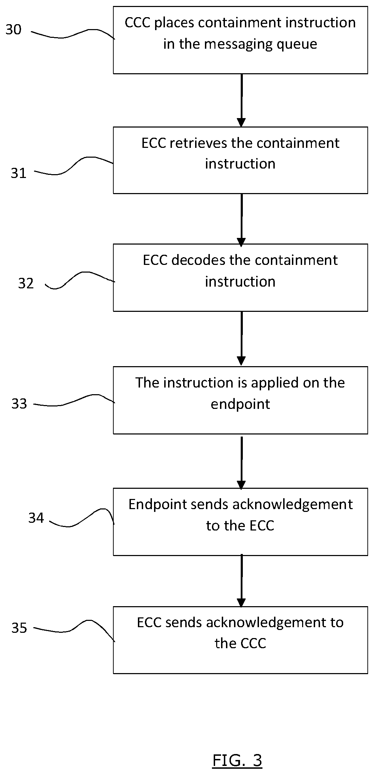

Figure 3 is a diagram illustrating some steps of the method according to the invention.

At step 30, the central containment component (CCC) sends the containment instruction to the specialized messaging bus and places it in the queue topic created for this purpose.

The edge containment component (ECC) regularly polls this instruction topic to check if there are any containment actions waiting for it to execute. This is done through an outbound call from within the company network to the CCC. If there are any containment actions to be performed, then it retrieves these actions as part of the outgoing call it has made at step 31.

The ECC decodes the instruction at step 32 and then uses in-built specialized API interfaces to execute the instruction on the endpoints at step 33. In other words, the ECC calls an API in the endpoint. The endpoint is where the logic would be executed on receiving the API call.

After executing the instruction, the endpoints send back the acknowledgement to the ECC at step 34. At step 35, the acknowledgement is then sent to the CCC's specialized messaging bus through an outbound connection. ECC places the acknowledgement into the queue topic created for this purpose.

The CCC continuously polls this acknowledgement topic to check if there are any acknowledgements waiting for it to process. If there are any, then it retrieves this acknowledgement and sends the status to the front end for the user.

Numerous variations and modifications will become apparent to those skilled in the art once the above disclosure is fully appreciated.

## Claims

1. Method for automatically sending containment instructions from a central containment component (3) contained in a public cloud (2) to an endpoint (10, 11) contained inside a company network (6) where a malicious activity has been detected; the method comprising the following steps:
- the central containment component (3) elaborates and places a secured containment instruction inside a messaging queue (4) of the central containment component,
- a component, called edge containment component (8), running inside the company network (6), periodically polls a messaging queue service by creating an outgoing connection from the company network (6) to the central containment component (3) in the public cloud (2),
- when the edge containment component (8) detects the containment instruction, the edge containment component retrieves, decodes and sends the containment instruction to the endpoint inside the company network.

2. Method according to claim 1, wherein the secured containment instruction consists in coding the instruction to be understood only by the edge containment component (8).

3. Method according to claim 1 or 2, wherein the step of retrieving the containment instruction by the edge containment component (8) is realized as a part of the same outgoing connection created by the edge containment component from the company network (6) to the central containment component (3) in the public cloud (2).

4. Method according to any of preceding claims, wherein the endpoint sends an acknowledgement of success or failure to the edge containment component (8) when the containment instruction is applied.

5. Method according to claim 4, wherein the edge containment component (8) sends the acknowledgement to the central containment component (3) by creating an outgoing connection and placing the acknowledgement in the messaging queue.

6. Method according to any of preceding claims, wherein the central containment component (3) periodically polls the messaging queue service to detect any acknowledgement.

7. Method according to any of preceding claims, wherein the edge containment component (8) uses an in-built API interface to execute the containment instruction on the endpoint.

8. Method according to any of preceding claims, wherein the endpoint (10, 11) is a server, a device or a firewall.

9. Method according to any of preceding claims, wherein the central containment component (3) runs asynchronously with respect to the edge containment component (8).

10. System for managing containment instruction, the system comprising:
- a central containment component (3) contained in a public cloud (2) configured to send a containment instruction to an endpoint (10, 11) contained inside a company network (6) where a malicious activity has been detected; the central containment component (3) being configured to elaborate and place a secured containment instruction inside a messaging queue (4) of the central containment component,
- a component, called edge containment component (8), running inside the company network (6) and configured to periodically poll a messaging queue service by creating an outgoing connection from the company network (6) to the central containment component (3) in the public cloud (2); when the edge containment component (8) detects the containment instruction, the edge containment component is configured to retrieve, decode and send the containment instruction to the endpoint (10, 11) inside the company network (6).

11. System according to claim 10, wherein the endpoint (10, 11) is a server, a device or a firewall.

## Patentansprüche

1. Verfahren zum automatischen Senden von Eindämmungsanweisungen von einer zentralen Eindämmungskomponente (3), die in einer öffentlichen Cloud (2) enthalten ist, an einen Endpunkt (10, 11), der innerhalb eines Unternehmensnetzwerks (6) enthalten ist, in dem eine bösartige Aktivität erkannt wurde; das Verfahren umfassend die folgenden Schritte:
- Ausarbeiten und Platzieren durch die zentrale Eindämmungskomponente (3) einer gesicherten Eindämmungsanweisung innerhalb einer Nachrichtenwarteschlange (4) der zentralen Eindämmungskomponente,
- periodisches Abfragen, durch eine Komponente, genannt Edge-Eindämmungskomponente (8), die innerhalb des Unternehmensnetzwerks (6) läuft, eines Nachrichtenwarteschlangendienstes, durch Erstellen einer ausgehenden Verbindung von dem Unternehmensnetzwerk (6) zu der zentralen Eindämmungskomponente (3) in der öffentlichen Cloud (2),
- wenn die Edge-Eindämmungskomponente (8) die Eindämmungsanweisung erkennt, Abrufen, Decodieren und Senden, durch die Edge-Eindämmungskomponente, der Eindämmungsanweisung an den Endpunkt innerhalb des Unternehmensnetzwerks.

2. Verfahren nach Anspruch 1, wobei die gesicherte Eindämmungsanweisung darin besteht, die Anweisung zu codieren, sodass sie nur von der Edge-Eindämmungskomponente (8) zu verstehen sind.

3. Verfahren nach Anspruch 1 oder 2, wobei der Schritt des Abrufens der Eindämmungsanweisung durch die Edge-Eindämmungskomponente (8) als Teil derselben ausgehenden Verbindung realisiert wird, die durch die Edge-Eindämmungskomponente von dem Unternehmensnetzwerk (6) zu der zentralen Eindämmungskomponente (3) in der öffentlichen Cloud (2) erstellt wird.

4. Verfahren nach einem der vorstehenden Ansprüche, wobei der Endpunkt eine Bestätigung des Erfolgs oder Fehlschlags an die Edge-Eindämmungskomponente (8) sendet, wenn die Eindämmungsanweisung angewendet wird.

5. Verfahren nach Anspruch 4, wobei die Edge-Eindämmungskomponente (8) die Bestätigung an die zentrale Eindämmungskomponente (3) sendet, durch Erstellen einer ausgehenden Verbindung und Platzieren der Bestätigung in die Nachrichtenwarteschlange.

6. Verfahren nach einem der vorstehenden Ansprüche, wobei die zentrale Eindämmungskomponente (3) den Nachrichtenwarteschlangendienst periodisch abfragt, um eine Bestätigung zu erkennen.

7. Verfahren nach einem der vorstehenden Ansprüche, wobei die Edge-Eindämmungskomponente (8) eine eingebaute API-Schnittstelle verwendet, um die Eindämmungsanweisung auf dem Endpunkt auszuführen.

8. Verfahren nach einem der vorstehenden Ansprüche, wobei der Endpunkt (10, 11) ein Server, eine Vorrichtung oder eine Firewall ist.

9. Verfahren nach einem der vorstehenden Ansprüche, wobei die zentrale Eindämmungskomponente (3) in Bezug auf die Edge-Eindämmungskomponente (8) asynchron läuft.

10. System zum Verwalten von Eindämmungsanweisungen, das System umfassend:
- eine zentrale Eindämmungskomponente (3), die in einer öffentlichen Cloud (2) enthalten ist, die konfiguriert ist, um eine Eindämmungsanweisung an einen Endpunkt (10, 11) zu senden, der innerhalb eines Unternehmensnetzwerk (6) enthalten ist, in dem eine bösartige Aktivität erkannt wurde; wobei die zentrale Eindämmungskomponente (3), konfiguriert ist, um eine gesicherte Eindämmungsanweisung auszuarbeiten, und diese innerhalb einer Nachrichtenwarteschlange (4) der zentralen Eindämmungskomponente zu platzieren,
- eine Komponente, genannt Edge-Eindämmungskomponente (8), die innerhalb des Unternehmensnetzwerks (6) läuft, und konfiguriert ist, um einen Nachrichtenwarteschlangendienst durch Erstellen einer ausgehenden Verbindung von dem Unternehmensnetzwerk (6) zu der zentralen Eindämmungskomponente (3) in der öffentlichen Cloud (2), periodisch abzufragen; wenn die Edge-Eindämmungskomponente (8) die Eindämmungsanweisung erkennt, die Edge-Eindämmungskomponente konfiguriert ist, um die Eindämmungsanweisung abzurufen, zu decodieren und an den Endpunkt (10, 11) innerhalb des Unternehmensnetzwerks (6) zu senden.

11. System nach Anspruch 10, wobei der Endpunkt (10, 11) ein Server, eine Vorrichtung oder eine Firewall ist.

## Revendications

1. Procédé pour envoyer automatiquement des instructions de confinement d'un composant de confinement central (3) contenu dans un nuage public (2) vers un point d'extrémité (10, 11) contenu dans un réseau d'entreprise (6) où une activité malveillante a été détectée ; le procédé comprenant les étapes suivantes :
- le composant de confinement central (3) élabore et place une instruction de confinement sécurisée dans une file d'attente de messagerie (4) du composant de confinement central,
- un composant, appelé composant de confinement de bord (8), fonctionnant à l'intérieur du réseau d'entreprise (6), interroge périodiquement un service de file d'attente de messagerie en créant une connexion sortante du réseau d'entreprise (6) vers le composant de confinement central (3) dans le nuage public (2),
- lorsque le composant de confinement de bord (8) détecte l'instruction de confinement, il récupère, décode et envoie l'instruction de confinement au point d'extrémité dans le réseau d'entreprise.

2. Procédé selon la revendication 1, dans lequel l'instruction de confinement sécurisée consiste à coder l'instruction de manière à ce qu'elle ne soit comprise que par le composant de confinement de bord (8).

3. Procédé selon la revendication 1 ou 2, dans lequel l'étape consistant à récupérer l'instruction de confinement par le composant de confinement de bord (8) est réalisée dans le cadre de la même connexion sortante créée par le composant de confinement de bord du réseau d'entreprise (6) vers le composant de confinement central (3) dans le nuage public (2).

4. Procédé selon l'une quelconque des revendications précédentes, dans lequel le point d'extrémité envoie un accusé de réception de succès ou d'échec au composant de confinement de bord (8) lorsque l'instruction de confinement est appliquée.

5. Procédé selon la revendication 4, dans lequel le composant de confinement de bord (8) envoie l'accusé de réception au composant de confinement central (3) en créant une connexion sortante et en plaçant l'accusé de réception dans la file d'attente de messagerie.

6. Procédé selon l'une quelconque des revendications précédentes, dans lequel le composant de confinement central (3) interroge périodiquement le service de file d'attente de messagerie pour détecter tout accusé de réception.

7. Procédé selon l'une quelconque des revendications précédentes, dans lequel le composant de confinement de bord (8) utilise une interface API intégrée pour exécuter l'instruction de confinement sur le point d'extrémité.

8. Procédé selon l'une quelconque des revendications précédentes, dans lequel le point d'extrémité (10, 11) est un serveur, un dispositif ou un pare-feu.

9. Procédé selon l'une quelconque des revendications précédentes, dans lequel le composant de confinement central (3) fonctionne de manière asynchrone par rapport au composant de confinement de bord (8).

10. Système permettant de gérer une instruction de confinement, le système comprenant :
- un composant de confinement central (3) contenu dans un nuage public (2) configuré pour envoyer une instruction de confinement à un point d'extrémité (10, 11) contenu dans un réseau d'entreprise (6) où une activité malveillante a été détectée ; le composant de confinement central (3) est configuré pour élaborer et placer une instruction de confinement sécurisée dans une file d'attente de messagerie (4) du composant de confinement central,
- un composant, appelé composant de confinement de bord (8), fonctionnant à l'intérieur du réseau d'entreprise (6) et configuré pour interroger périodiquement un service de file d'attente de messagerie en créant une connexion sortante du réseau d'entreprise (6) vers le composant de confinement central (3) dans le nuage public (2) ; lorsque le composant de confinement de bord (8) détecte l'instruction de confinement, le composant de confinement de bord est configuré pour récupérer, décoder et envoyer l'instruction de confinement au point d'extrémité (10, 11) à l'intérieur du réseau d'entreprise (6).

11. Système selon la revendication 10, dans lequel le point d'extrémité (10, 11) est un serveur, un dispositif ou un pare-feu.
